# EUROPÄISCHE PATENTSCHRIFT

(11) **EP 3 390 511 B1**
(45) Veröffentlichungstag und Bekanntmachung des Hinweises auf die Patenterteilung: **29.12.2021**
(21) Anmeldenummer: 16805367.6
(22) Anmeldetag: 29.11.2016
(51) Int. Cl.: C08J 11/14, C08J 11/24

(54) **VERFAHREN ZUR EINSTELLUNG VORGEBBARER VISKOSITÄTSWERTE BEIM RECYCELN VON POLYESTERABFÄLLEN**
PROCESS FOR ESTABLISHING PRESCRIBABLE VISCOSITY VALUES IN RECYCLING OF POLYESTER WASTES
PROCÉDÉ POUR LE RÉGLAGE DE VALEURS DE VISCOSITÉ POUVANT ÊTRE DÉFINIES AU PRÉALABLE LORS DU RECYCLAGE DE DÉCHETS DE POLYESTER

(30) Priorität: 18.12.2015 DE 102015226043
(43) Veröffentlichungstag der Anmeldung: 24.10.2018
(73) Patentinhaber: Gneuss GmbH, 32549 Bad Oeynhausen (DE)
(72) Erfinder: GNEUSS, Detlef, 32545 Bad Oeynhausen (DE); GNEUSS, Stephan, Bad Oeynhausen 32545 (DE); GNEUSS, Daniel, Charlotte North Carolina 28277 (US)
(74) Vertreter: Tarvenkorn, Oliver
(86) Internationale Anmeldenummer: PCT/EP2016/079146
(87) Internationale Veröffentlichungsnummer: WO 2017/102313

(56) Entgegenhaltungen:
- EP-A2- 0 942 035
- US-A- 3 480 586

## Beschreibung

Die Erfindung betrifft ein Verfahren zur Einstellung vorgebbarer Viskositätswerte beim Recyceln von in sich unterschiedliche Viskositäten aufweisenden Polyesterabfällen.

Beim Recyceln von Polyesterabfällen von z. B. PET-Bottleflakes weisen die einzelnen Bottleflakes einer Charge regelmäßig unterschiedliche intrinsische Lösungsviskosität (iV) auf. Für eine Weiterverarbeitung der aus den Bottleflakes hergestellten Schmelze, z. B. zu Teppichgarnen, Folien oder auch neuen PET-Flaschen wird ein einheitlicher iV-Wert verlangt. Neben dem iV-Wert wird insbesondere für die Weiterverarbeitung von Schmelze zu PET-Flaschen auch auf die Farbgestaltung der PET-Flaschen zu achten sein.

Zur Beeinflussung der Viskosität beim Recyceln von Polyesterabfällen wird nach der EP 942 035 B1 vorgeschlagen, die Polyesterabfälle aufzuschmelzen und neben dem damit durch die anhaftende Feuchte verbundenen hydrolytischen Abbau durch die Zugabe eines entsprechenden Diols noch einen glykolytischen Abbau der Schmelze herbeizuführen, bevor die Schmelze im Polykondensationsprozess einem gewünschten Polymerisationsgrad zugeführt wird.

Dabei wird durch den hydrolytischen und glykolytischen Abbau eine starke Verminderung des iV-Wertes in Kauf genommen. Um durch den Polykondensationsvorgang einen gewünschten, höheren iV-Wert zu erreichen, muss die Schmelze entsprechend lang, bei vorgebbarem Unterdruck in einem Reaktor gerührt werden, wobei die Schmelze einem langen thermischen und mechanischen Abbau unterliegt. Neben dem größeren Zeitaufwand ist auch ein entsprechender energetischer hoher Aufwand notwendig, um gewünschte iV- Werte einstellen zu können.

Durch die DE 10 2006 023 354 B4 ist ein Verfahren zur Wiederverwertung von Polyestermaterial bekannt geworden, nach dem Altpolyester zunächst aufwendig aufbereitet, anschließend mit Frischpolyester vermischt und in einem Hochviskos-Schmelzereaktor weiterverarbeitet. Neben einem hohen Aufwand ist ein reines Recyceln von Polyester dabei nicht möglich.

Der Erfindung liegt die Aufgabe zugrunde, ein Verfahren der eingangs genannten Art dahingehend zu verbessern, dass das gewünschte Endmaterial mit entsprechender Viskosität nach kürzerer Zeit und bei weniger Energieverbrauch vorliegt, wobei zusätzlich die Farbgestaltung der Schmelze beeinflussbar sein soll.

Zur Lösung der Aufgabe wird ein Verfahren mit den Merkmalen des Anspruchs 1 vorgeschlagen, dass die Polyesterabfälle in einem ersten Bereich eines Extruders erschmolzen werden und durch die mit den Polyesterabfällen eingebrachte Feuchte einen hydrolytischen Abbau erfahren, dass in einem zweiten Bereich des Extruders eine Polykondensation erfolgt, wobei dem hydrolytischen Abbau entgegengewirkt wird und eine Vergleichmäßigung der Viskositätsunterschiede gestartet wird, dass in einem dritten Bereich des Extruders Lösungsmittel wie Wasser oder Alkohol zugeführt wird, wobei ein hydrolytischer und / oder glykolytischer Abbau der Schmelze hin zu einer gleichmäßigen Viskosität der Schmelze erfolgt, dass in einem vierten Bereich des Extruders ein aktives Vermischen der Schmelze erfolgt, und dass die Schmelze aus dem Extruder in einen Polykondensationsreaktor überführt wird, wobei im Polykondensationsreaktor die endgültige gewünschte Viskosität der Schmelze eingestellt wird.

Durch das Entgegenwirken wird der hydrolytische Abbau weitgehend rückgängig gemacht, wobei die weitgehende Rückgängigmachung des hydrolytischen Abbaus zwischen 10% und 70% betragen kann. Durch die frühe Rückgängigmachung, und zwar bevor ein zusätzlicher hydrolytischer und/oder glykolytischer Abbau erfolgt, wird erreicht, dass die unterschiedlichen iV-Werte des nicht einheitlichen Eingangsmaterials bereits aneinander angeglichen werden und dass der gesamte iV-Wertebereich erhöht wird, bevor ein weiterer hydrolytischer bzw. glykolytischer Abbau der Schmelze durch Zuführung von Lösungsmittel eingeleitet wird. Durch diese frühe Polykondensation wird der iV-Wert bereits im Extruder erhöht, so dass der iV-Wert der Schmelze nie so stark abfällt, wie es z. B. nach dem oben erwähnten Stand der Technik der Fall ist. Dadurch, dass im dritten Bereich des Extruders Lösungsmittel zugeführt wird, kann die Vergleichmäßigung der iV-Werte auf höherem iV-Wert-Niveau weitergeführt werden. Dabei wird der iV-Wert der Schmelze jedoch nicht so stark absinken wie beim Stand der Technik, da hier von einem höheren iV-Wert ausgegangen wird. Hinzu kommt, dass im anschließenden Polykondensationsreaktor die Schmelze, deren iV-Wert von einem höheren Niveau ausgeht, nur noch kürzer beeinflusst werden muss, so dass sich eine Zeitersparnis, aber auch erhebliche Energieersparnis im Polykondensationsreaktor gegenüber dem Stand der Technik ergibt.Dabei kann der Partialdruck der verwendeten Lösungsmittel, in diesem Fall dem Wasser, im zweiten Bereich des Extruders, in dem der hydrolytische Abbau rückgängig gemacht wird, in einem Bereich von 0,1 mbar und 50 mbar, vorzugsweise in einem Bereich von 2 bis 40 mbar, eingestellt werden. Der Partialdruck des verwendeten Lösungsmittels im Polykondensationsreaktor kann zwischen 0,1 mbar und 20 mbar, vorzugsweise zwischen 0,5 mbar und 10 mbar, eingestellt werden.Dabei werden beim Eintrag der Polyesterabfälle zwischen 0,1 % und 1 % und sogar >1 % des Gesamteintrags in Form von Wasser eingegeben. Durch die frühe Rückgängigmachung des hydrolytischen Abbaus wird dieses Wasser im Polykondensationsbereich des Extruders früher ausgetragen, so dass sich keine Nachteile durch einen langen Verbleib des Wassers in der Polyester-Schmelze ergeben.

Es hat sich bewährt, dass die Schmelze am Ausgang des Extruders gefiltert wird und vor Eintritt in den Polykondensationsreaktor und / oder nach dem Austritt aus dem Polykondensationsreaktor die intrinsische Viskosität durch Ermittlung der Viskosität der Schmelze bestimmt wird.

Bereits im Polykondensationsextruder erfolgt eine gewisse Reinigung der Schmelze. Vorteilhaft ist jedoch eine mechanische Reinigung durch einen Filter vorzunehmen.

Die ermittelten Viskositätswerte können dann zur Steuerung oder Regelung der Lösungsmittelzufuhr und / oder der Druckdifferenz zwischen dem Innendruck und dem Außendruck am Polykondensationsextruder und / oder am Polykondensationsreaktor herangezogen werden. Damit lässt sich der gewünschte iV-Wert am Ausgang des Polykondensationsreaktors über mehrere Stellmöglichkeiten optimal einregeln.

Um den hydrolytischen Abbau zu minimieren und damit mit möglichst hohem iV in den Folgeprozess zu gehen, könnte man versuchen, diesen durch eine Reduktion des Wassergehaltes zu minimieren.

Durch die im Altpolyester immer vorhandenen Reststoffe und Kontaminationen kommt es jedoch in der Praxis zu einer Gelbfärbung des Polyesters. Es hat sich nun aber überraschend gezeigt, dass die Gelbfärbung in der Schmelze umso geringer ausfällt, je höher der Wassergehalt in der Eingangsstufe, dem ersten Bereich des Extruders, gewählt wird. Um eine Reduktion zu erreichen, muss der Wassergehalt mindestens 0,1 % betragen. Eine besonders effiziente Betriebsweise wird erreicht, wenn der Wassergehalt zwischen 0,3 und 1 ,5 % eingestellt wird.

Noch höhere Wassergehalte lassen zwar eine weitere Gelbwertreduktion zu, bringen aber dann Nachteile bei der anschließenden Rückgängigmachung des hydrolytischen Abbaus.

Von daher ergibt sich erfindungsgemäß ein besonderer Vorteil, wenn der Gelbwert der Schmelze in Flussrichtung hinter dem Extruder und / oder hinter dem Polykondensationsreaktor ermittelt wird, und in Abhängigkeit des ermittelten Gelbwertes der H₂O-Gehalt im ersten Bereich des Extruders und / oder im dritten Bereich des Extruders eingestellt wird. Dadurch ergibt sich eine weitere Reinigung der Schmelze, die den Gelbwert entsprechend beeinflusst. Dabei sollte der Wassergehalt vor der ersten bzw. in der ersten Stufe soweit angehoben werden, dass der Gelbwert b* des Endprodukts um mindestens 20% bis 50 %, bezogen auf wasserfreies Polyester, reduziert wird.

Optimal ist, wenn der Gelbwert nicht durch z. B. eine Bedienperson nach Erfahrungswerten ermittelt wird, sondern wenn der Gelbwert durch ein optisches Messverfahren bestimmt wird. Die durch das optische Messverfahren ermittelten Gelbwerte können dann noch genauer zur Beeinflussung des H₂O-Gehalts der Schmelze vor bzw. im ersten Bereich des Extruders sowie im dritten Bereich des Extruders herangezogen werden.

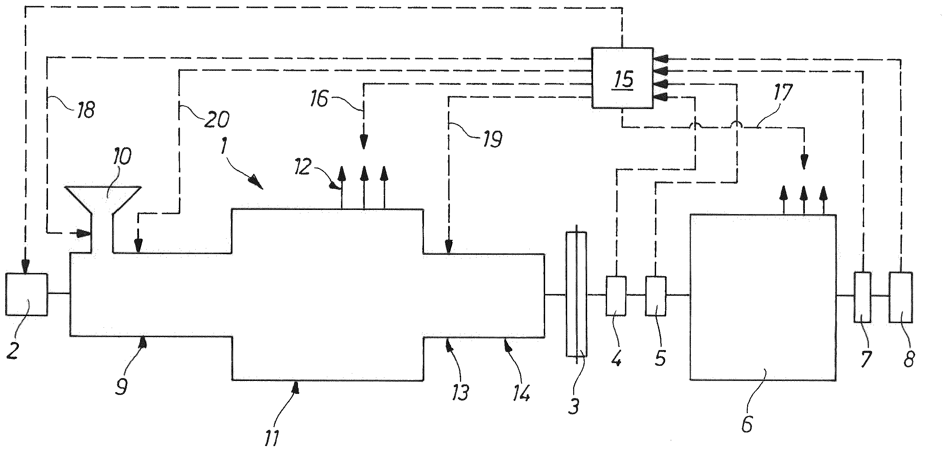

Die Erfindung wird anhand einer Zeichnung näher erläutert. Dabei zeigt die Figur einen Extruder 1, der von einem Motor 2 angetrieben ist. Dem Extruder 1 folgt ein Filter 3, ein Viskositätsmesser 4, ein optisches Messgerät 5, ein Polykondensationsreaktor 6, ein Viskositätsmesser 7 und ein optisches Messgerät 8.

Der Extruder 1 weist einen ersten Bereich 9 auf, in den über eine Eingabevorrichtung 10 Polyesterabfälle eingegeben und in dem diese erschmolzen werden können. Der Extruder 1 weist weiterhin einen zweiten Bereich 11 als Polykondensationsteil auf. Am Polykondensationsteil 11 ist ein Vakuum 12 angeschlossen.

In einem dritten Bereich 13 des Extruders 1 kann ein Lösungsmittel, wie z. B. Wasser und/oder ein Alkohol, in den Extruder 1 eingegeben werden, während in einem vierten Bereich 14 des Extruders 1 die Schmelze gemischt wird.

Die Sensoren 4, 5, 7 und 8 sind auf eine Regelvorrichtung 15 geschaltet, die nicht nur die Drehzahl des Motors 2 zu beeinflussen vermag, sondern auch über die Steuerleitung 16 den Druck im Extruder 1 und über die Steuerleitung 17 den Druck im Polykondensationsreaktor 6 einstellen kann. Über die Steuerleitungen 18, 19 und 20 lässt sich die Menge und Art des Lösungsmittels, welches an verschiedenen Stellen in den ersten Teil 9 des Extruders 1 und / oder in den dritten Teil 13 des Extruders 1 eingegeben werden kann, beeinflussen.

### Bezugszeichenliste

- 1: Extruder
- 2: Motor
- 3: Filter
- 4: Viskositätsmesser
- 5: optisches Messgerät
- 6: Polykondensationsreaktor
- 7: Viskositätsmesser
- 8: optisches Messgerät
- 9: erster Bereich (des Extruders)
- 10: Eingabevorrichtung
- 11: zweiter Bereich (Polykondensationsbereich des Extruders)
- 12: Vakuum
- 13: dritter Bereich (des Extruders)
- 14: vierter Bereich (des Extruders)
- 15: Regelvorrichtung
- 16: Steuerleitung
- 17: Steuerleitung
- 18: Steuerleitung
- 19: Steuerleitung
- 20: Steuerleitung

## Patentansprüche

1. Verfahren zur Einstellung vorgebbarer Viskositätswerte beim Recyceln von in sich unterschiedliche Viskositäten aufweisenden Polyesterabfällen, wobei die Polyesterabfälle in einem ersten Bereich (9) eines Extruders (1) erschmolzen werden und durch die mit den Polyesterabfällen eingebrachte Feuchte einen hydrolytischen Abbau erfahren, wobei der Wassergehalt in dem ersten Bereich (9) mindestens 0,1 % betragen muss, und
wobei die Schmelze aus dem Extruder (1) in einen Polykondensationsreaktor (6) überführt wird, wobei im Polykondensationsreaktor (6) die endgültige, gewünschte Viskosität der Schmelze eingestellt wird.
**dadurch gekennzeichnet,**
- **dass** in einem zweiten Bereich (11) des Extruders (1) eine Polykondensation erfolgt, wobei dem hydrolytischen Abbau entgegengewirkt wird und eine Vergleichmäßigung der Viskositätsunterschiede gestartet wird, und wobei der Partialdruck des verwendeten Lösungsmittels über ein anliegendes Vakuum (12) in einem Bereich von 0,1 mbar und 50 mbar eingestellt wird;
- **dass** in einem dritten Bereich (13) des Extruders (1) Lösungsmittel ausgewählt aus Wasser oder Alkohol zugeführt wird, wobei ein hydrolytischer und / oder glykolytischer Abbau der Schmelze hin zu einer gleichmäßigen Viskosität der Schmelze erfolgt,
- **dass** in einem vierten Bereich (14) des Extruders (1) ein aktives Vermischen der Schmelze erfolgt.

2. Verfahren nach Anspruch 1, **dadurch gekennzeichnet, dass** die Schmelze aus Ausgang des Extruders (1) gefiltert wird und vor Eintritt in den Polykondensationsreaktor (6) und / oder nach dem Austritt aus dem Polykondensationsreaktor (6) die intrinsische Viskosität durch Ermittlung der Viskosität der Schmelze bestimmt wird / werden.

3. Verfahren nach Anspruch 2, **dadurch gekennzeichnet, dass** die ermittelten Viskositäten zur Steuerung / Regelung der Lösungsmittelzufuhr und / oder der Druckdifferenz zwischen dem Innendruck und dem Außendruck am Polykondensationsextruder (Bereich 11) und / oder Polykondensationsreaktor (6) herangezogen werden.

4. Verfahren nach einem der Ansprüche 1 bis 3, **dadurch gekennzeichnet, dass** der Gelbwert der Schmelze in Flussrichtung hinter dem Extruder (1) und / oder hinter dem Polykondensationsreaktor (6) ermittelt wird und dass in Abhängigkeit der ermittelten Gelbwerte der H₂O-Gehalt im ersten Bereich (9) des Extruders (1) und / oder im dritten Bereich (13) des Extruders eingestellt wird.

5. Verfahren nach Anspruch 4, **dadurch gekennzeichnet, dass** der Gelbwert durch ein optisches Messverfahren bestimmt wird.

6. Verfahren nach einem der Ansprüche 1 bis 5, **dadurch gekennzeichnet, dass** der Wassergehalt in dem ersten Bereich (9) zwischen 0,1% und 1% beträgt.

7. Verfahren nach einem der Ansprüche 1 bis 6, **dadurch gekennzeichnet, dass** der Wassergehalt in dem ersten Bereich (9) zwischen 0,3% und 1,5% beträgt.

8. Verfahren nach einem der Ansprüche 1 bis 7, **dadurch gekennzeichnet, dass** der Partialdruck des Lösungsmittels in dem zweiten Bereich (11) zwischen 2 mbar und 40 mbar beträgt.

9. Verfahren nach einem der Ansprüche 1 bis 8, **dadurch gekennzeichnet, dass** der Partialdruck des Lösungsmittels im Polykondensationsreaktor zwischen 0,1 mbar und 20 mbar beträgt.

10. Verfahren nach Anspruch 9, **dadurch gekennzeichnet, dass** der Partialdruck des Lösungsmittels im Polykondensationsreaktor zwischen 0,5 mbar und 10 mbar beträgt.

## Claims

1. Method for setting of prescribable viscosity values in the recycling of polyester wastes having intrinsically different viscosities, where the polyester wastes are melted in a first region (9) of an extruder (1) and undergo hydrolytic cleavage caused by the moisture introduced with at the polyester wastes, and where the water content in the first region (9) must amount to at least 0.1%, and where the melt is transferred from the extruder (1) into a polycondensation reactor (6), and the final, desired viscosity of the melt is set in the polycondensation reactor (6).
**characterized in that**
- in a second region (11) of the extruder (1) a polycondensation takes place, countering the effect of the hydrolytic cleavage, and an equalization of the viscosity differences is initiated, and the partial pressure of the solvent used is set in a region of 0.1 mbar and 50 mbar by way of a prevailing vacuum (12);
- in a third region (13) of the extruder (1), solvent selected from water or alcohol is introduced, whereupon hydrolytic and/or glycolytic cleavage of the melt takes place to give a consistent viscosity of the melt,
- in a fourth region (14) of the extruder (1) an active mixing of the melt takes place.

2. Method according to Claim 1, **characterized in that** the melt from the outlet of the extruder (1) is filtered and, before entry into the polycondensation reactor (6) and/or after the discharge from the polycondensation reactor (6), the intrinsic viscosity is/are determined by ascertaining the viscosity of the melt.

3. Method according to Claim 2, **characterized in that** the viscosities ascertained are utilized for the control/regulation of the solvent supply and/or of the pressure difference between the internal pressure and the external pressure at the polycondensation extruder (region 11) and/or polycondensation reactor (6).

4. Method according to any of Claims 1 to 3, **characterized in that** the Yellowness Index of the melt downstream of the extruder (1) and/or downstream of the polycondensation reactor (6) is ascertained, and the Yellowness Indices ascertained influence the setting of the H₂O content in the first region (9) of the extruder (1) and/or in the third region (13) of the extruder.

5. Method according to Claim 4, **characterized in that** the Yellowness Index is determined by an optical measurement method.

6. Method according to any of Claims 1 to 5, **characterized in that** the water content in the first region (9) amounts to between 0.1% and 1%.

7. Method according to any of Claims 1 to 6, **characterized in that** the water content in the first region (9) amounts to between 0.3% and 1.5%.

8. Method according to any of Claims 1 to 7, **characterized in that** the partial pressure of the solvent in the second region (11) amounts to between 2 mbar and 40 mbar.

9. Method according to any of Claims 1 to 8, **characterized in that** the partial pressure of the solvent in the polycondensation reactor amounts to between 0.1 mbar and 20 mbar.

10. Method according to Claims 9, **characterized in that** the partial pressure of the solvent in the polycondensation reactor amounts to between 0.5 mbar and 10 mbar.

## Revendications

1. Procédé de réglage de valeurs de viscosité spécifiables lors du recyclage de déchets de polyester ayant des viscosités différentes,
les déchets de polyester étant fondus dans une première zone (9) d'une extrudeuse (1) et subissant une dégradation hydrolytique en raison de l'humidité introduite avec les déchets de polyester, la teneur en eau dans la première zone (9) devant être d'au moins 0,1 %,
et
la matière fondue étant transférée de l'extrudeuse (1) dans un réacteur de polycondensation (6), la viscosité finale souhaitée de la matière fondue étant réglée dans le réacteur de polycondensation (6).
**caractérisé en ce que**
- une polycondensation étant effectuée dans une deuxième zone (11) de l'extrudeuse (1), la dégradation hydrolytique étant contrecarrée et une égalisation des différences de viscosité étant amorcée, et la pression partielle du solvant utilisé étant réglée par application d'un vide (12) dans une gamme allant de 0,1 mbar et 50 mbar ;
- un solvant choisi parmi l'eau ou l'alcool étant amené dans une troisième zone (13) de l'extrudeuse (1), une dégradation hydrolytique et/ou glycolytique de la matière fondue étant effectuée dans le sens d'une viscosité uniforme de la matière fondue,
- la matière fondue étant activement mélangée dans une quatrième zone (14) de l'extrudeuse (1).

2. Procédé selon la revendication 1, **caractérisé en ce que** la matière fondue issue est filtrée en sortie de l'extrudeuse (1) et, avant d'entrer dans le réacteur de polycondensation (6) et/ou après avoir quitté le réacteur de polycondensation (6), la viscosité intrinsèque est/sont déterminée par détermination de la viscosité de la matière fondue.

3. Procédé selon la revendication 2, **caractérisé en ce que** les viscosités déterminées sont utilisées pour commander/réguler l'amenée de solvant et/ou la différence de pression entre la pression interne et la pression externe au niveau de l'extrudeuse de polycondensation (zone 11) et/ou du réacteur de polycondensation (6).

4. Procédé selon l'une des revendications 1 à 3, **caractérisé en ce que** l'indice de jaune de la matière fondue est déterminé en aval de l'extrudeuse (1) et/ou en aval du réacteur de polycondensation (6) dans le sens de l'écoulement et **en ce que** la teneur en H₂O dans la première zone (9) de l'extrudeuse (1) et/ou dans la troisième zone (13) de l'extrudeuse est réglée en fonction des indices de jaune déterminés.

5. Procédé selon la revendication 4, **caractérisé en ce que** l'indice de jaune est déterminé par un procédé de mesure optique.

6. Procédé selon l'une des revendications 1 à 5, **caractérisé en ce que** la teneur en eau dans la première zone (9) est comprise entre 0,1 % et 1 %.

7. Procédé selon l'une des revendications 1 à 6, **caractérisé en ce que** la teneur en eau dans la première zone (9) est comprise entre 0,3 % et 1,5 %.

8. Procédé selon l'une des revendications 1 à 7, **caractérisé en ce que** la pression partielle du solvant dans la deuxième zone (11) est comprise entre 2 mbar et 40 mbar.

9. Procédé selon l'une des revendications 1 à 8, **caractérisé en ce que** la pression partielle du solvant dans le réacteur de polycondensation est comprise entre 0,1 mbar et 20 mbar.

10. Procédé selon la revendication 9, **caractérisé en ce que** la pression partielle du solvant dans le réacteur de polycondensation est comprise entre 0,5 mbar et 10 mbar.
